# EUROPEAN PATENT SPECIFICATION

(11) **EP 4 450 801 B1**
(45) Date of publication and mention of the grant of the patent: **04.06.2025**
(21) Application number: 24171761.0
(22) Date of filing: 22.04.2024
(51) Int. Cl.: F03D 1/06, F03D 13/10

(54) **BULKHEAD REMOVAL DEVICE AND METHOD**
VORRICHTUNG UND VERFAHREN ZUR ENTFERNUNG VON SCHOTTWÄNDEN
DISPOSITIF ET PROCÉDÉ DE RETRAIT DE CLOISON

(30) Priority: 20.04.2023 US 202363497413 P
(43) Date of publication of application: 23.10.2024
(73) Proprietor: FabricAir Canada Inc., Waterloo, ON N2V 1K4 (CA)
(72) Inventor: BAXTER, Dylan, Waterloo, N2V 1K4 (CA); Campagna, Marc-André, Waterloo, N2V 1K4 (CA); ROEPER, Daniela, Waterloo, N2V 1K4 (CA); Bégin-Drolet, André, Waterloo, N2V 1K4 (CA); Fortin-Moreau, Olivier, Waterloo, N2V 1K4 (CA)
(74) Representative: Humphrey-Evans, Edward John

(56) References cited:
- EP-A1- 0 825 330
- EP-A1- 4 019 767
- US-A1- 2006 161 289
- US-A1- 2020 056 582

## Description

### Technical Field

The embodiments disclosed herein relate to the removal of bulkheads inside a wind turbine blade, and, in particular to devices, apparatuses, and methods of bulkhead removal.

### Introduction

Wind resources for wind energy production may be located in cold, humid regions where ice may form on a blade of a wind turbine. Wind turbine blade icing may cause several problems for the operation of the wind turbine such as measurement error, prolonged power loss, mechanical failure, and safety hazards. Therefore, it is desirable to have a wind turbine blade ice protection or de-icing system. Installation and proper functioning of an ice protection system, such as those described in US Patent No. 10,823,152 and US Patent Application No. 2022/0195993, calls for interior access to the tip of each blade. However, depending on the manufacturer of the blades, there can be several bulkheads within the blade cavity which block access to the tip. Bulkheads are foam/fiberglass or wood/fiberglass structures which are independent from the blade. These bulkheads are not structural and only serve a purpose during the lifting of wind turbine blades. In order to install ice protection systems in blades with bulkheads, these obstructions need to be removed. Another prior art example is US2020/056582A1.

Accordingly, there is a need for a bulkhead removal system and method that can remove the bulkheads, at least in part, from the blade cavity.

### Summary

Herein is provided a method of removing a bulkhead in a wind turbine blade, which method may include positioning a bulkhead removal device at a desired distance from a first bulkhead, aligning a drill on the first bulkhead, securing an extension subsystem to the blade, securing the drill to the blade and drilling a first bulkhead.

The method may further include releasing the drill from the blade, extending the drill through the first bulkhead to a second bulkhead, by the secured extension subsystem, securing the drill to the blade, and drilling the second bulkhead. Positioning the bulkhead removal device, aligning the drill, securing the extension subsystem, securing the drill, and drilling the first bulkhead may be controlled by a control subsystem. Positioning the bulkhead removal device may further include using a proximity sensor and at least one camera which provide information to an operator at a user interface of the control subsystem. Aligning the drill may further include using at least one laser and the at least one camera to provide alignment information to the operator at the user interface.

Securing the extension system to the blade may further include extending a plurality of jackscrews out from the extension subsystem to contact an interior of the blade. Securing the drill to the blade may further include extending a plurality of outriggers out from the drill to contact the interior of the blade. Releasing the drill from the blade includes retracting a plurality of outriggers back towards the drill. Drilling the first bulkhead may further include rotating the drill and extending the drill forward from the rest of the drilling subsystem through the first bulkhead.

The control subsystem may include at least one computing device having at least one processor and a memory storing processor-executable instructions, wherein the processor executes the instructions to run an application and generate a user interface, and the method may further include wherein an operator controls the operation of the bulkhead removal system through the user interface.

Herein is provided a bulkhead removal system comprising: a bulkhead removal device comprising a drilling subsystem comprising a drill for drilling at least one bulkhead within a wind turbine blade, an extension subsystem, physically connected to the drilling subsystem and releasably securable to the wind turbine blade, for moving the drilling subsystem toward a tip end of the wind turbine blade and moving the drilling subsystem away from the tip end of the wind turbine blade, and a control subsystem for controlling movement of the drilling subsystem, and operation of the drill.

The drilling subsystem may further include a head, having a cylindrical body, with a drill at a tip end of the head, the drill including a drill bit and a drill body, wherein the drill body is housed within the body of the head and extends out of the body of the head to drill through a bulkhead, and wherein the drill is operably connected to the control subsystem; a plurality of outriggers on the head which extend out from the body of the head to releasably secure the head to the wind turbine blade, wherein the outriggers are operably connected to the control subsystem; and an extension piece connection on a root end of the head, configured to connect to an extension piece.

The extension subsystem may further includes a base with a cavity in which a rack attachment extension piece is disposed; a plurality of extension pieces which are connected end to end, wherein a root-most extension piece is connected to the rack attachment extension piece and a tip-most extension piece is connected to the extension piece connection on the head; a plurality of jackscrews on the base which are extendable out from the base to releasably secure the base to the wind turbine blade, wherein the jackscrews are operably connected to the control subsystem; and a pinion and pinion actuator within the base which are operably coupled to the rack attachment, wherein the pinion actuator is operably connected to the control subsystem, and wherein rotation of the pinion moves the head of the drilling subsystem by moving the rack attachment extension piece.

The control subsystem may include at least one computing device having at least one processor and a memory storing processor-executable instructions, wherein the processor executes the instructions to run an application and generate a user interface which enables an operator to control operation of the drilling subsystem and the extension subsystem. The bulkhead removal system may further include a connection subsystem to receive power cables from the drilling subsystem and the extension subsystem and connect the drilling subsystem and the extension subsystem to a power source, and to receive control cables from the drilling subsystem and the extension subsystem and connect the drilling subsystem and extension subsystem to the control subsystem.

The drilling subsystem may further include a proximity sensor to determine a position of the drill relative to a bulkhead and wherein the proximity sensor is communicatively coupled to the control subsystem to provide proximity information to the operator. The drilling subsystem may further include at least one camera to provide a view of the drill which can be viewed by the operator on the user interface. The drilling subsystem may further include at least one laser for aligning the drill with each of the plurality of bulkheads, wherein the at least one camera provides a view of the laser which can be viewed by operator on the user interface.

The control subsystem may include a safety control which is operably connected to the bulkhead removal robot and configured to enable the operator to pause or stop operation of the bulkhead removal device. The bulkhead removal system may further include a vacuum subsystem for removing drilled pieces of bulkhead. The connection subsystem may further include at least one connection box connected to the drilling subsystem and the extension subsystem by a first plurality of cables and connected to the control subsystem by a second plurality of cables wherein the first plurality of cables is greater in number than the second plurality of cables and the cables in the second plurality of cables are stronger than the cables in the first plurality of cables.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a wind turbine;
Figure 2 is a perspective view of the basic structure of a wind turbine blade;
Figure 3 is a cross-sectional view of a bulkhead inside a wind turbine blade;
Figure 4 is a box diagram of the subsystems of the bulkhead removal system, according to an embodiment;
Figure 5 is a block diagram of a broad overview of a bulkhead removal system, according to an embodiment;
Figure 6 is a flow diagram of a method of removing bulkhead using the bulkhead removal system, according to an embodiment;
Figure 7 is a perspective view of part of the bulkhead removal system and four bulkheads showing the robot head positioned before the bulkheads, according to an embodiment;
Figure 8 is a perspective view of part of a bulkhead removal system and four bulkheads showing the head and extension pieces positioned between the second and third bulkheads, according to an embodiment;
Figure 9A & 9B are, respectively, side and perspective views of a head of a bulkhead removal system, according to an embodiment;
Figure 10A & 10B are, respectively, perspective and front views of a drill bit of a head of a bulkhead removal system, according to an embodiment;
Figure 11 is a perspective view of a base, extension pieces, and extension piece with rack of a bulkhead removal system, according to an embodiment;
Figure 12A is side view of a base and rack attachment extension piece of a bulkhead removal system, according to an embodiment;
Figure 12B is a perspective view of a body of a base of a bulkhead removal system, according to an embodiment;
Figure 12C is a front view of a jack screw and jack screw actuator of a base of a bulkhead removal system, according to an embodiment; and
Figure 13 is a flow diagram of a method of assembly of bulkhead removal system according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

The term "bulkhead" refers to structures which are installed into a wind turbine blade during the manufacturing process. Bulkheads are foam/fiberglass or wood/fiberglass structures which are independent from the wind turbine blade. These bulkheads may not be structural during turbine operation and may primarily serve a purpose during the lifting of wind turbine blades. The locations of bulkheads inside wind turbine blades may vary and can be located by tapping along the outside of the wind turbine blade, sequential discovery during drilling (e.g. the first bulkhead is visible, drill through it and measure the distance to the second bulkhead, and repeat until no bulkheads remain), or using manufacturer specifications. For example, an MM92 blade may contain five bulkheads, at the first location, the cavity of the wind turbine blade may be small and allow for a very restricted range of motion for the blade entrant.

Bulkheads may have a sandwich structure, consisting of a single core layer of structural foam with outer layers of fiberglass. The complete structure may be over 50mm in thickness. The cores of bulkheads may be made of a closed-cell, cross-linked PVC foam such as a structural PVC core by Gurit. The cores of bulkheads may also possess a polyester fiberglass resin. These bulkheads are typically added to blades to stiffen specific sections of the blade against crushing of the shell - and in particular the leading edge or nose of the blade - during lifting and other transportation operations or during storage. Bulkheads are typically not critical to the structural functioning of the blade during operation. The bulkheads typically are not a load-carrying member and are typically not installed to prevent panel buckling of the shell during operation. The bulkhead features, if the bulkheads were structurally critical, would be considered ribs - chordwise elements of a structure included to provide resistance to panel buckling or to transfer loads between spanwise load-carrying elements. Some types of structures (e.g., most notably aircraft wings) employ such ribs because the skins are extremely thin, however wind turbine blades typically do not incorporate ribs into their structural design and instead incorporate bulkheads. The amount of bulkhead which needs to be removed will depend on the specific ice protection system (or other system which needs to be installed and requires access to the blade tip).

When cutting holes in these bulkheads, a periphery of the bulkhead around the interior of the blade shell may be left to avoid causing any damage to the blade shell structure by trying to grind the bulkhead down flush to the skin, as cutting down flush to the skin may result in nicking the inner layers of the inner skin of the wind turbine blade. The necessity for flushness depends on the manner of parts, systems, etc. which are being installed in the blade. For ice protection systems, for example the ice protection systems described in US Patent No. 10, 823,152 and US Patent Application No. 2022/0195993, it is not necessary to remove the bulkhead down to the skin.

After removing a bulkhead, leading edge supports may be employed to protect the leading edge of the blade outboard in the spanwise areas where these bulkheads are being modified whenever the blade is strapped for lifting or when the blades are supported in stands with the leading edge down. The application of leading edge supports is generally considered good practice, but could be more important after removing bulkheads designed to lessen the need for such precautions. The leading edge supports should be designed to conform to the leading edge shape (for example, can have a wall at least 3/8" (9mm) thick). The leading edge supports should spread out the load from the straps or stands (for example, can be at least 600mm (24") long). Extreme care should be exercised to ensure that straps do not slip off the leading edge supports when moving the blades. Alternatively, when supporting the blades in stands, stands with wide (>600mm) saddles can also be employed without the use of the leading edge supports.

Herein, a bulkhead removal system comprising a drilling subsystem, extension subsystem, connection subsystem, and control subsystem is described. The overall shape and size of the wind turbine blade necessitates distribution of the subsystems along the length of the wind turbine blade. That is, because the wind turbine blade tapers in interior space from the root to the tip and because the space at the tip where the bulkheads are located is relatively small, the bulkhead removal system described herein is designed to minimize the components which are required closer to the tip end of the blade. The drilling subsystem, extension subsystem, and connection subsystem are spread along the length of with the drilling subsystem being closest to the tip end of the blade (closest to the bulkheads), the extension subsystem trailing behind the drilling subsystem and located between the drilling subsystem and the connection subsystem, and the connection subsystem trailing behind the extension subsystem and located closest to the root end of blade. The drilling subsystem is required at the locations of the bulkheads to drill through the bulkheads but the extension subsystem which allows the drill to access each bulkhead is not required at the location of the bulkhead so the extension subsystem is anchored or "releasably secured" at a location on the root side of the bulkheads. This also has the benefit of minimizing the amount of bulkhead which needs to be removed as only the drilling subsystem components pass through the bulkhead. The electrical and control components which are required for operation and proper functioning of the drilling subsystem and the extension subsystem, but which do not need to be located at the exact same location as the drilling subsystem and extension subsystem, are located even further to the root side of the blade than the extension subsystem. Removing the non-essential electrical and control components from the drilling subsystem and extension subsystem allow those subsystems to be as small as possible to make assembly, movement, and functioning of the subsystems as quick and efficient as possible.

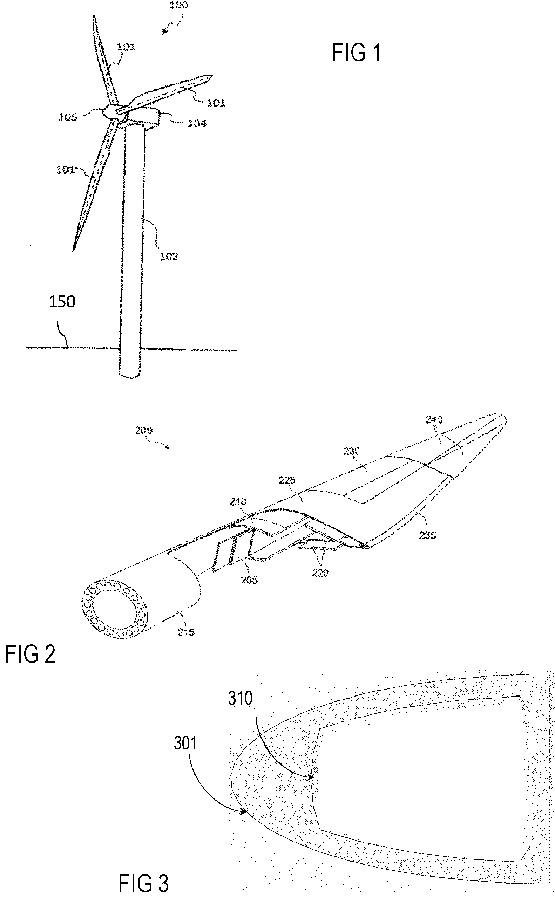

Referring now to Figure 1, illustrated therein is a wind turbine 100, according to an embodiment. The wind turbine 100 is used to convert wind energy into electric energy. In an embodiment, the wind energy may be kinetic energy. In this embodiment, the wind turbine 100 may use a mechanical electrical generator to perform the energy conversion. The wind turbine 100 includes three blades 101, a tower 102, a nacelle 104, and a hub (main shaft portion) 106.The wind turbine 100 includes three blades 101 but other wind turbines may include more or less blades. The tower 102 of the wind turbine 100 is physically connected to surface 150. The surface 150 may be ground. Ice may accumulate on the exterior surface of the blades 101. The hub 106, which includes a main shaft portion, is coupled to a power transmission shaft (not shown) and rotatably disposed on the nacelle 104. The nacelle 104 houses electrical and mechanical components of the wind turbine 100.

If wind turbine 100 is present in an environment where ice may form on the blades 101 may have a de-icing or ice protection system to be retrofitted. As discussed above, some wind turbines have bulkheads in the blade which serve no functional purpose beyond aiding in the transport of the blades and which serve no structural purpose. In order to retrofit the wind turbine blades to have internal ice protection systems at least part of each bulkhead is removed to provide access along the length of the blade.

Referring to Figure 2, the basic structure of a wind turbine blade 200 is shown. The root 215 is the end of the wind turbine blade 200 which attaches to the wind turbine. The spar 210 is a spanwise load-carrying element down the center. The spar 210 is the element that primarily resists the out-of-plane loads acting on a wind turbine blade 200. Wind turbine blades typically feature no chordwise elements as part of the primary structure. The central spar 210 may take on the form of either a box beam with two shear webs (not shown) or an I-beam with a single web 205. A structural adhesive layer 235 attaches the shell 225 to the core 220 and spar 210. The shell 225 is covered by a gel coat 230 and paint 240. Unlike the skins of aircraft wings, the shells 225 of wind turbine blades employ relatively thicker sandwich core construction to resist panel buckling, thereby eliminating the need for ribs.

The shells 225 of a wind turbine blade are typically made of lightweight material. Given the very light structure of the shells 225, handling such wind turbine blades 200 would be challenging without some reinforcement of the shells 225 at the lift points. The reinforcement of the shells consists primarily of extra layers of glass added to the exterior of the shells 225 at the lift points, with the fibers oriented in the chordwise direction. In some versions of the wind turbine blade 200, however, contoured blocks of foam are also included in the interior to prevent crushing of the leading edge of the shells during handling. In some versions, these blocks consist of bulkheads.

The use of bulkheads provides additional protection for wind turbine blades, in case all requirements with respect to the use of protection for the leading edge (and trailing edge for that matter) and proper widths of straps when moving blades are not followed. Riggers will often employ narrow straps without protection, and then the highly concentrated load at the location of the straps can cause crushing or cracking at the strapped location. Similarly, if blades are stored nose down on narrow stands, the loads can also be damaging. If the blades are stored for a long time, plastic creep can cause permanent deformation of the leading edge without other structural damage.

Referring to Figure 3, illustrated therein is view of a bulkhead 310 in a blade 301. The bulkhead removal system described herein cuts a hole in the bulkhead 320 using a drill. The hole which is cut is large enough for the components of the system which are to be installed or employed within the blade, for example, an ice protection system.

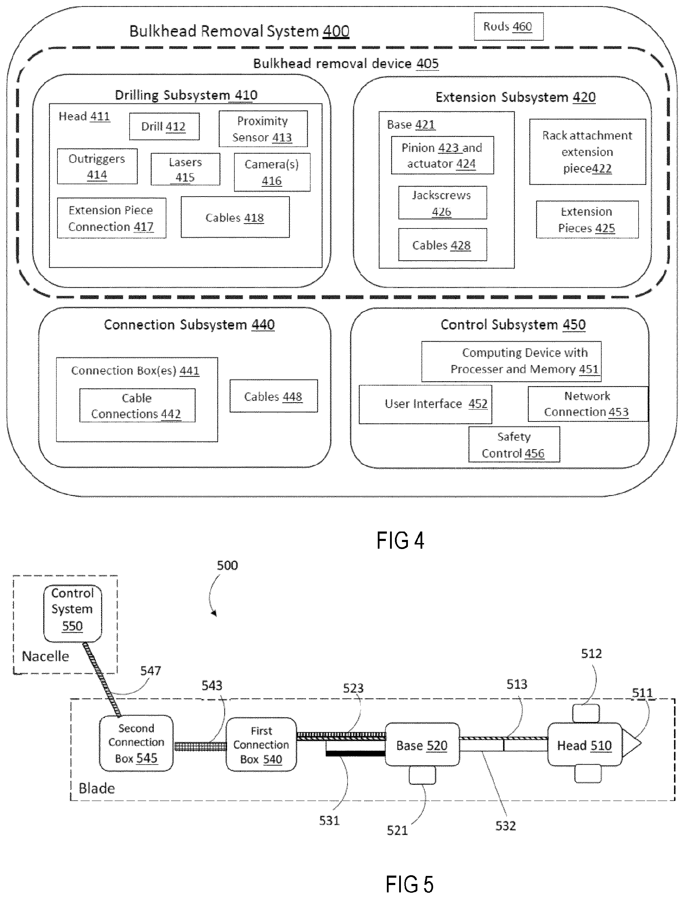

Figure 4 is a box diagram of the various subsystems of the bulkhead removal system. The subsystems overlap and the inclusion of a component within one subsystem does not mean that solely works within that subsystem.

The bulkhead removal system 400 includes a bulkhead removal device 405 comprising a drilling subsystem 410 and an extension (and retraction) subsystem 420, a connection subsystem 440, and a control subsystem 450.

The drilling subsystem 410, extension and retraction subsystem 420, and the connection subsystem 440 make up a bulkhead removal robot which is controlled by control subsystem 450. The components within each subsystem are shown within the box for each subsystem.

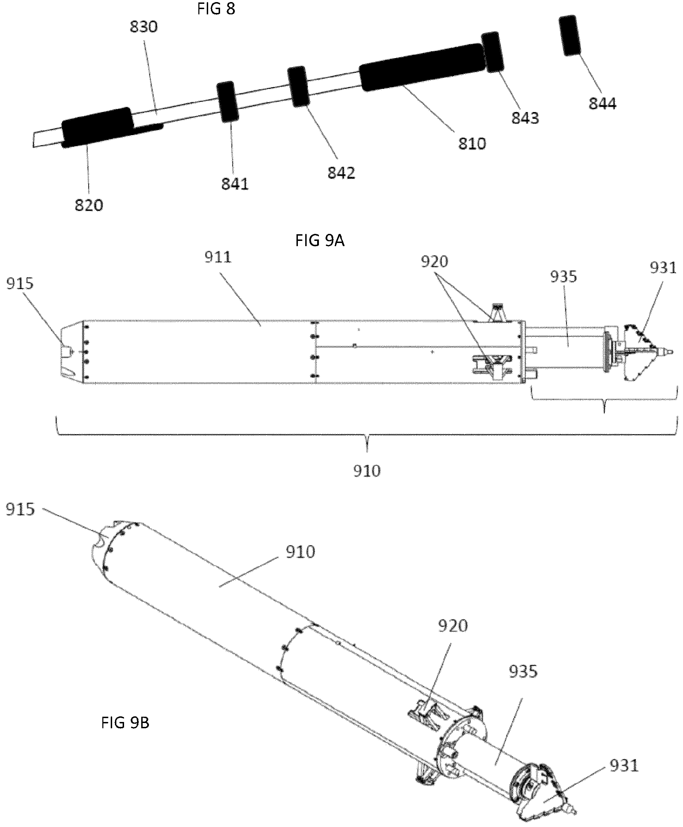

The drilling subsystem 410 includes a head 411 which may be a cylindrical, torpedo-shaped, or otherwise elongated shape with a drill 412 at the tip side of the blade. The head may be made of a metal. Components which are considered part of the head 411 because they are attached to or held within the head 411 include drill 412 (See Figures 9A and 9B) comprising a drill bit and a drill body which moves to extend out from within the body of the head 411 or retracts to move back into the body of the head 411, outriggers 414 which extend out from the body of the head and retract back towards the body of the head, proximity sensor 413, lasers 415, camera(s) 416, and an extension piece connection 417.

In other embodiments, the mechanism of removing part of the bulkhead may not be drilling. In those embodiments the drilling subsystem may be called a removal subsystem. Other mechanisms for removing part of the bulkhead may include sawing, melting, chipping, etc.

Various components of the head require power to operate including the drill 412, the sensor 413, the outriggers 414, the laser 415, and camera(s) 416. These components also require communicative coupling to the control system to both send and receive data and/or instructions from the control system. Cables 418 include all of the power cables and control cables which are required for power and communicative coupling. The cables 418 are secured together in a cable bundle.

Herein, a "control cable" is any cable which sends and/or receives data which enables an operator to control the operation of a component of the bulkhead removal robot. Control cables include, but are not limited to, camera cables which transmit video data, sensor cables which transmit sensor data, actuator cables which transmit and receive data to operate an actuator, etc.

The extension subsystem 420 includes a base 421 which includes a cavity in which an rack attachment extension piece 422 component is disposed. The extension piece 422 may be a long rectangular prism made of metal, such as a square metal beam. The extension piece 422 has an extension piece connection point which enables connection of the extension piece to other extension pieces by securing with a plurality of bolts. In other embodiments, the extension piece may be secured to other extension pieces by any other suitable connection. The base 421 includes a pinion 423 which is operationally coupled to the rack and which can be rotated by an actuator 424 to move the rack component 422 and, therefore, to extend the extension piece 422 out of the base towards the tip of the blade or retract the extension piece 422 back towards the root side of the blade.

In other embodiments the attachment mechanism between the base and the extension pieces may be any suitable attachment mechanism which allows the base to move along the extension pieces. That is, the attachment mechanism does not need to be a rack attachment.

The rack attachment extension piece is at least as long as the distance between the first bulkhead and the last bulkhead as well as the length of the base in order to ensure that the drill can be extended through the last bulkhead.

The base also includes jackscrews 426 which secure the base to the blade and which are extended out from or retracted back towards the body of the base 421 by jackscrew actuators.

In other embodiments, the jackscrews may be replaced by any other extendable and retractable leg that can secure the base to the blade.

Various components of the base require power to operate including the pinion actuator 424 and jackscrews actuators. These components also require communicative coupling to the control system to both send and receive data and/or instructions from the control system. Cables 428 include all of the power cables and control cables which are required for power and communicative coupling. The cables 428 are secured together in a cable bundle. Cable bundle 418 and cable bundle 428 may be secured together in the space between the base and the connection box(es).

The head 411 is indirectly connected to the extension piece with rack component 422 by a plurality of other extension pieces 425 (also elongated metal beam, rectangular prisms). Each extension piece 425 has an extension piece connection point at each end which can connect to other extension piece connection points by securing with six bolts. The head 411 may have an extension piece connection 417 which can be bolted to an extension piece or may be connected to the extension piece by any other suitable extension piece connection. As discussed above, the extension pieces and the extension piece with rack are connected end to end, lengthwise, using a plurality of bolts. In other embodiments the extension pieces may be connected by other connection types, for example male-female connections.

Once assembled the head 411 and the base 421 are connected by extension pieces 422 and 425. Therefore, when the pinion 423 is rotated to move the extension piece with rack towards the tip of the blade the head 411 also moves towards the tip of the blade, and when the pinion 423 is rotated to retract the extension piece with rack towards the root of the blade the head 411 also retracts.

As the interior space of the blade is small and because it is more efficient to remove as little of each bulkhead as possible, any components which are not required to be in close proximity to the bulkhead (i.e. drilling components, sensors, etc.) trail behind the head 411, base 421, and the other components associated with the drilling subsystem 410 and extension subsystem 420. This allows the head 411 and base 421 to be sized and shaped solely for the functions of drilling (head 411) and drill movement (base 421). The components which do not need to be present near the bulkheads include those for powering the drilling subsystem 410 and extension subsystem 420 and for receiving data from sensors, such as proximity sensor 413, and camera(s) 416 present in the drilling subsystem 410 and extension subsystem 420. As discussed above, the only components which are present at the drilling subsystem 410 and extension subsystem 420 for these purposes are the cables 418 and 428.

Connection subsystem 440 includes at least one connection box 441 which comprises connections for cables 418 and 428. The connection box(es) trails behind the drilling subsystem 410 and extension subsystem 420 within the blade (at the root side). Cables 418 and 428 represent a plurality of power and control cables which are delicate and, therefore, not suitable for running the long distance from the components at the drilling and extension subsystems to the control subsystem. Along the span from the drilling and extension subsystems to the nacelle there are any numbers of obstructions and/or wear points where the cables could snag, rub, or break. Therefore, the connection subsystem serves a cable management purpose and consolidates the plurality of cables into fewer cables. For example, there may be nine cables which are input from the drilling and extension subsystems into connection box(es) 441 and only three cables which are output from connection box(es) 441 to a power source and to the control subsystem 450.

The cables which run from the connection box(es) 441 to the power source and the control subsystem 450 are of a higher-strength than the cables which run from the drilling and extension subsystems to the connection box(es) 441 and are neatly bundled to survive the long distance and any obstacles from the connection box(es) 441 to the power source and control subsystem 450.

The distance between the connection box(es) 441 and the drilling and extension subsystems should be as short as possible to minimize the length required for cables 418 and 428. However, the interior space of the blade, which gets smaller towards the tip of the blade, limits the distance the connection box(es) 441 can travel towards the tip. The connection boxes are sized to accommodate any electrical components to consolidate the power cables and other components to consolidate the control cables. Therefore, the specific shape and size of the interior of a given wind turbine blade may necessitate that more than one connection box be used in the connection subsystem 440 (See Figure 5). In some embodiments, there are two connection boxes, a major connection box and a minor connection box, or a primary connection box and an auxiliary connection box. In some embodiments the connection boxes may manage all of the cables in sequence and in some embodiments the connection boxes may manage different sets of cables in parallel. In some embodiments, the connection subsystem may include a light which is used to illuminate the interior of the blade, as the connection subsystem is positioned well within the blade to illuminate the drilling subsystem 410 and the extension system 420.

Connection subsystem 440 includes cables 448. The cables 448 include at least three cables. The first cable is a power cable which connects the bulkhead removal robot to a power source. The power source may be in the nacelle. The power source may be a battery or the robot may be directly connected to the wind turbine power source. If the power source is a battery, the battery may be at the connection box(es) 441 of the connection subsystem 440 and may be a removable, rechargeable battery.

The second cable is a network connection cable to communicatively connect the bulkhead removal robot to the control subsystem 450. In some embodiments, the connection between the connection subsystem 440 and the control subsystem 450 could be achieved wirelessly, however, communicative connections to the drilling subsystem and the extension subsystem deeper within the blade are unreliable and, therefore, wired connections are necessary. The third cable connects the bulkhead removal robot to a remote control of the control system. The remote control allows the operator at the control system to pause or emergency stop operation of the bulkhead removal robot. In some embodiments there are two connection boxes trailing the base 421, a smaller box closer to the base 421 and a larger box further away from the base 421.

Control subsystem 450 includes at least one computing device 451. The computing device 451 includes at least one processor and at least one memory wherein the memory stores processor executable instructions for software which enables a user to control the robot. The processor executes the instructions to create a user interface 452 for the software. The user interface 452 (and the associated software) allows the user to view the incoming information from cameras 416, and sensors such as proximity sensor 413, to control the movement of the head via the pinion actuator 424, to control the drilling action of the drill 412, to align the drill 412 with the center of a bulkhead, and to stabilize the robot using outriggers 414 and jackscrews 426.

In some embodiments of the control system, the software allows control of the system to be fully manually controlled by an operator. In other embodiments, the system may be fully automatically controlled by the control system. In other embodiments, the system may be controlled partly manually and partly automatically. For example, there may be commands such as "extend all outriggers until they touch a surface" where the outriggers are automatically extended until a pressure sensor indicates that a surface has been touched instead of the operator manually operating the outriggers until they see that a pressure sensor indicates a surface has been touched.

The control subsystem 450 is connected to the connection subsystem 440 via a network connection cable 453. The control subsystem 450 also includes remote control 456 which allows the user to pause or emergency stop the action of the robot and which is connected to the connection subsystem440 by a cable. The safety control has two buttons, wherein the first button stops the cutting motion of the drill and the linear motion (along the tip-root axis of the blade) of the drill, and the second button pauses the linear motion of the drill but the cutting motion continues. Cutting motion and linear motion can also be paused or stopped through the user interface 452, however, stopping using physical buttons is much quicker.

Once assembled the bulkhead removal robot is be moved as close to the first bulkhead as possible. This is done manually by pushing the robot towards the tip of the blade with rods 460. The first rod is connected to the base 421 of the robot. Two human workers are positioned at spaced-apart positions (approximately 5m apart) as close to the tip as possible and they use rods 460 to push the robot towards the first bulkhead. The rods 460 are joined end to end by male-female connections and more rods are added as necessary to continue to push the robot towards the first bulkhead. The humans are spaced apart so that the long connected rods are easier to maneuver. The various components of the robot which are in contact with the blade (i.e., the base, the connection boxes, etc.) may have wheels, rollers, or low friction plates to allow for the robot to be pushed towards the tip. These wheels, rollers, and/or low friction plates should be present on any surface of any component which may come in contact with the blade.

The head 411 of the robot has a drill 412 (i.e., a drill bit or drillhead) on the tip side which is used to drill through each bulkhead. When the robot is moved towards the blade the preferable position of the drill 412 is within 10mm of the bulkhead. The distance from the drill 412 to the bulkhead is measured by a proximity sensor 413. Information from the proximity sensor is viewed through the control subsystem 450 which will be discussed below. The proximity sensor may have a maximum perception distance of 50mm. Therefore, a camera 416 is present on the head 411 to provide a view of the drill 412 on the user interface 452 to enable the user in the nacelle to view the location of the drill with respect to the bulkhead and to inform the workers who are pushing the robot of the proximity of the drill 412 to the bulkhead.

Other cameras 416 present on the robot include a second camera positioned on the leading edge side of the head 411 and pointing towards the tip used to see what is in front of the head 410. A third camera is positioned on top of a connection box 441 and pointed towards the tip of the blade to monitor the movement of the head 411 and base 421. A fourth camera is on top of the head 411 and pointing towards the root of the blade and is used when retracting the entire robot back towards the root. Each of the four cameras will have a power cable and a control cable which are in the appropriate cable bundle based on the location of the camera.

When the drill 412 is within 10mm of the bulkhead the drill 412 is then aligned with the center of the bulkhead. Alignment of the drill at the first bulkhead is crucial to ensuring that the head 411 and drill 412 are able to drill through all of the bulkheads (usually four, but could be more or less) without having to readjust the position of the robot or re-drill any of the holes. Lasers 415 on the head 411 are used to align the drill both horizontally and vertically with respect to the bulkhead and the interior of the blade. The lasers 415 can be seen on the user interface 452. In an embodiment, there are three lasers which delineate the cutting region on the bulkhead. The drilling subsystem 410 includes a plurality of outriggers 414 on the head 411 which enable the head 411 and, therefore, the drill 412 to be aligned properly with the bulkhead. The outriggers 414 extend out from the head 411 and contact the blade on the top side, bottom side, and shear web side. The movement of the outriggers 414 is accomplished by outrigger actuators.

The extension system 420 includes a plurality of jackscrews 426 present on the base 421 which enable the base 421 to be secured within the blade. The movement of the jackscrews 426 is accomplished by jackscrew actuators. The jackscrews 426 extend and retract to wedge the base 421 against the interior of the blade so that the base 421 does not move during drilling operations.

In some embodiments, there are eight jackscrews. Three of the jackscrews are positioned to contact the shear web and the other five to contact the leading edge. The jackscrews enable the operator to have control over the position of the base along an axis perpendicular to the bulkheads and can enable positions which are slightly off-axis to drill into the bulkhead on an angle.

The extension and retraction of the outriggers 414 and jackscrews 426 is controlled from the control subsystem 450 on the user interface 452. The extension of the outriggers 414 and jackscrews 426 to contact the interior of the blade allows the drill to remain aligned at the center of the bulkhead in operation and can also be used to create a good alignment. The outriggers 414 only affect the alignment of the head 411 and drill 412.The jackscrews 426 can affect the alignment of the base 421 as well as the head 411 and drill 412. During drilling operations the jackscrews 414 remain extended until drilling of all bulkheads is complete while the outriggers are retracted after each bulkhead is drilled so that the head 411 can move through the drilled bulkhead to the next bulkhead. At the next bulkhead the outriggers 414 are extended to contact the blade and stabilize the head 411 for drilling the next bulkhead. The movement of the head 411 through each bulkhead to the next bulkhead is controlled at the user interface 452 by controlling the pinion actuator 424.

The operation of the drill 412 is controlled at the user interface 452. The drill 412 extends out from the head 412 during drilling and retracts back towards the head 412 when moving to the next bulkhead. Both the drilling speed and the extension and retraction movement of the drill 412 are controlled by the user at the user interface 452. When drilling of all the bulkheads is complete, the outriggers 414 are retracted and the head 411 is retracted back through the drilled bulkheads by retracting the extension piece with rack 422 by moving the pinion 423 using actuator 424. In some embodiments, there may be a cutting surface on the back (root side) of the drill to remove any bulkhead material which would prevent the drill from retracting. In some embodiments, there is a brush on the back (root side) of the drill bit which can be used to clean off the camera.

The jackscrews 426 are retracted to free the base. The robot is pulled back out using the rods and disconnected rods as the robot gets closer. In some embodiments, a rope may be attached to the base of the robot as a back-up method of pulling the robot out should the rods become disconnected. In some embodiments, the rope may be connected to the head 411, the base 421, and the connection box(es) 441.

In some embodiments, a vacuum subsystem may be present on the robot and connected to the connection box(es) 441 for power and control. The vacuum system enables the pieces of bulkhead to be cleaned up as the robot drills, or after the robot has drilled, through a bulkhead. In other embodiments, there is no vacuum system present on the robot and the pieces of bulkhead are cleaned up by turning the wind turbine to allow the pieces to fall towards the root of the blade and then cleaning the pieces up with a separate vacuum (or other way of collecting and disposing of the pieces).

Referring now to Figure 5 shown therein is a block diagram of a broad overview of a bulkhead removal system 500, according to an embodiment. Bulkhead removal system 500 includes a bulkhead removal robot comprising a head 510, a base 520, a first connection box 540, and a second connection box 545. The bulkhead removal system also includes a control system 550. The bulkhead removal robot is positioned within the blade, while the control system is primarily in the nacelle (some cables which are part of the control system are within the blade).

The head 510 includes the elements required for drilling through the bulkhead and is located closest to the tip end of the blade of all of the components of the bulkhead removal system. Head 510 includes drill 511 to drill through the bulkhead. Drill 511 includes a drill bit for cutting through the bulkhead and a drill body which moves out from within a body of the head 510 to move the drill bit through the bulkhead. The drill 511 is located on the tip side of the head 510. The drill 511 is sized and shaped to make a hole in the bulkhead through which the rest of the head components can pass. The head 510 may have a cylindrical or torpedo shape. Regardless of the overall shape of the head 510 the entirety of the head 510 and its associated components are able to pass through the hole which is drilled in each of the bulkheads.

While the head 510 includes components for accomplishing drilling (drilling subsystem of Figure 4), the base 520 includes components of the extension subsystem of Figure 4. The base 520 has an interior cavity which holds an extension piece with an attached rack 531. The base 520 includes a pinion which is coupled to the rack, in use, to enable movement of the extension piece 531 forwards toward the tip (extension) and backwards toward the root (retraction). The movement of the pinion is accomplished through a rack and pinion actuator in the base 520.

A plurality of extension pieces 532 connect the head 510 to extension piece 531 of the base 520. The extension pieces 531 and 532 are connected end to end. Two extension pieces 532 are shown in Figure 5, however any number of extension pieces may be used as long as the length of the head 510 and attached extension pieces 531 is sufficient for the head to travel the distance from the first bulkhead through the last bulkhead. Because the rack and pinion system of the base 520 is attached to the head 510 by the extension pieces 531 and 532, movement of the rack and pinion system of the base 520 causes extension of the head 510 away from the secured base 520 (or retraction of the head 510 back towards the base 520).

In other embodiments, other systems, other than rack and pinion, to achieve moving the head 510 through each drilled bulkhead and towards the tip (and then back towards the root) can be used. The important aspect is that the movement is provided at a distance from the bulk of the components of the drilling subsystem. If the movement of the drill was provided by components which were in the same place as the drill, then more of the bulkhead is removed in order to create a hole large enough for the movement components to pass through each bulkhead along with the drilling components. Removing less of the bulkhead also means less bulkhead material is to be cleaned up, removed from the turbine, and disposed of. As well, because the base is secured in place before drilling begins and then does not need to be moved again until drilling is completed, the time it takes to drill through all of the bulkheads is reduced compared to a system in which the entire system needs to be moved between bulkheads. Finally, because the base is secured in a position where the drill is properly aligned, there is less likelihood that the drill will need to be re-aligned or holes will need to be redrilled in order to ensure that holes are aligned across all of the bulkheads, compared to a system where the drill needs to be aligned from scratch at every bulkhead.

When the bulkhead removal system is being moved towards the first bulkhead the head 510 should be in the most retracted position where the head 510 is as close to the base 520 as possible, although the necessity for this position depends on the distance between the first and last bulkheads. That is, if the head and base are as close together as possible when the base is secured to the blade then the head is capable of moving a greater distance away from the base than if the head is not fully retracted. For example, if the distance the head 510 can move from the base 520 is eight meters and the distance from the first bulkhead through the last bulkhead is six meters then the base is no more than two meters away from the first bulkhead.

The head 510 includes components to enable alignment and stability of the drilling system. The head 510 comprises at least one proximity sensor for detecting a distance of the drill 511 and/or head 510 from an object in front of it, in particular the root side of a bulkhead. The proximity sensor enables the drill 511 to be brought close enough to the bulkhead for drilling. The head 510 may also include components for aligning the head 510 and in particular the center of the drill 511 with the bulkhead and within the blade such that all of the bulkheads can be drilled without having to realign the head 510 or re-drill any of the holes. The alignment components may include a plurality of lasers which can be aligned with various aspects of the head 510 and the blade to ensure proper positioning. Positioning the head 510 requires a plurality of cameras 512 in order to see the lasers. At least one camera may be positioned on top of the head 510 and looking at the drill. In some embodiments, the head 510 may also include at least one pressure sensor for determining a pressure of an outrigger against the blade, at least one tachometer to measure the drill bit cutting speed, and at least one encoder to measure an angular position of the drill bit.

Once proper positioning has been achieved or is close to being achieved a plurality of outriggers 512 present on the surface of the head 510 are deployed from the head 510 to contact various surfaces of the interior of the blade and to stabilize the head within the blade cavity and in front of the bulkhead. In some embodiments, the extent to which each outrigger is extended out from the head 510 can be used to position the drill 511 at the correct location on the bulkhead. Base 520 includes jackscrews which secure the base 520 to the blade once the head 510 has been moved into position in front of the first bulkhead. The jackscrews are small legs which can be extended or retracted from base 520. Like the outriggers, the extent of extension of the jackscrews can aid in positioning the head 510.

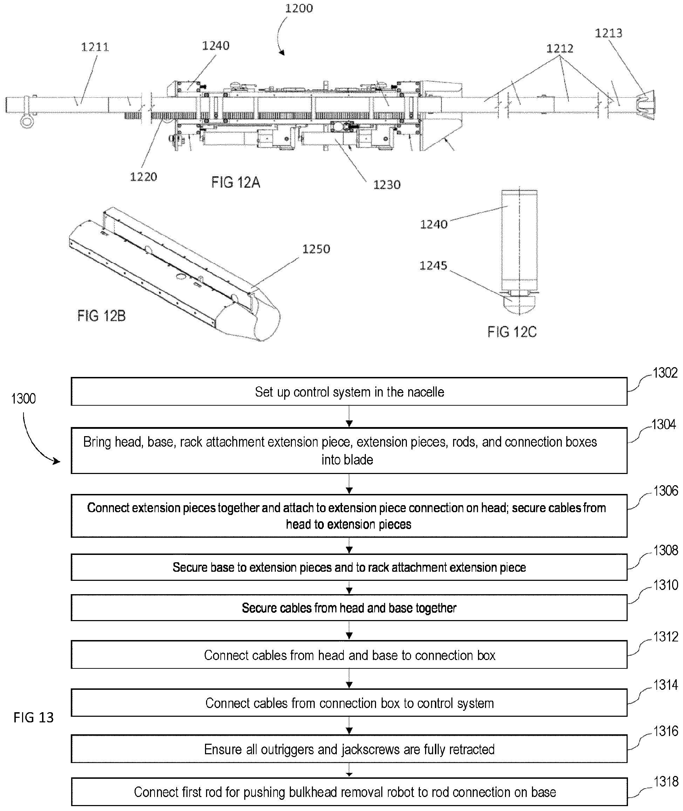

The outriggers 512 of the embodiment of Figure 5 are legs with flat ski-like feet (See Figures 9a and 9B). The legs extend out from the head 510 and the feet contact the surface of interior surface of the blade. In the embodiment of Figure 5, there are three outriggers 512, which contact the blade at the top of the head 510, the bottom of the head 510, and on the shear web side of the head 510. The jackscrews are legs with rounded feet (see Figures 12A and 12C). The legs extend out from the base 520. Possible locations of the jackscrews are described above.

When the head 510 has drilled through the first bulkhead the outriggers are retracted so that the head 510 can move through the first bulkhead. The outriggers are then re-deployed to position and stabilize the drill in front of the second bulkhead, and this process is repeated for all subsequent bulkheads. The jackscrews which secure the base 520 to the blade remain in place during the entire drilling operation (barring any complications or errors). The jackscrews enable the base 520 to fit into a variety of different wind turbine blades, which may different between manufacturers in size and shape. In other embodiments other means of alignment may be used to ensure proper positioning of the head 510.

The drill 511, sensors, outriggers, and cameras present at the head 510 require power and a communicative coupling to control system 550 to function. Cables which connect the components to a power source and to the control system run along the extension pieces 532 and through base 520 on extension piece 531 in a cable bundle 513 (angled lines). The power cables may be low voltage cables and the communication cables may be ethernet cables.

The rack and pinion system and the jackscrews of base 520 also require power and a communicative coupling to control system 550. Cables which connect the components to a power source and to the control system run along the extension piece 531 in cable bundle 523 (vertical lines). Both cable bundles 513 and 523 are connected to first connection box 540 which is movable with head 510 and base 520, and trails behind within the blade. Advantageously, by having the power and communication components be removed from the extension and drilling components it enables the drilling components to be small enough to cut through the bulkheads quickly and efficiently. Each of the cables in the two cable bundles is connected individually to the first connection box 540. A third cable bundle 543 (grid lines lines) connects the first connection box to the second connection box 545. In some embodiments, there may be only one connection box.

Together the head 510, drill 511, outriggers 512, cameras 514, base 520, extension piece with rack 531, pinion, jackscrews 521, extension pieces 532, the cables in cable bundles 513 and 523, the first connection box 540, the cable in cable bundle 543, and the second connection box 545 are a bulkhead removal "robot" which is controlled by a user at control system 550. The robot is connected to control system 550 by a cable bundle 547 (horizontal lines) which connects second connection box 545 to the control system. Cable bundle 547 includes three cables. One cable to connect the robot to a power source. A second cable to create a network connection between the robot and the control system. And a third cable to connect the robot to a safety control.

The control system 550 includes a computing device having at least one processor for executing instructions to run a software program for controlling the bulkhead removal robot, and a memory storage for storing the software program. The processor executes the instructions to create a user interface which a user can use to control the operation of the bulkhead removal robot. The control system 550 further includes a safety control for the robot which enables the user to pause or emergency stop the operation of the robot. The computing device is preferably a laptop computer for ease of moving the device into and out of the turbine. A single laptop screen may not be sufficient for monitoring all of the aspects of the robot, therefore, a second screen may be used.

In one embodiment of the bulkhead removal system, there are four cameras present on the bulkhead removal robot. The first camera, as discussed above is on the top of the robot head looking at the drill and is used for aligning the drill with the center of the bulkhead but also with the interior of the blade such that the head 510 can move straight ahead and drill accurately through all of the bulkheads.

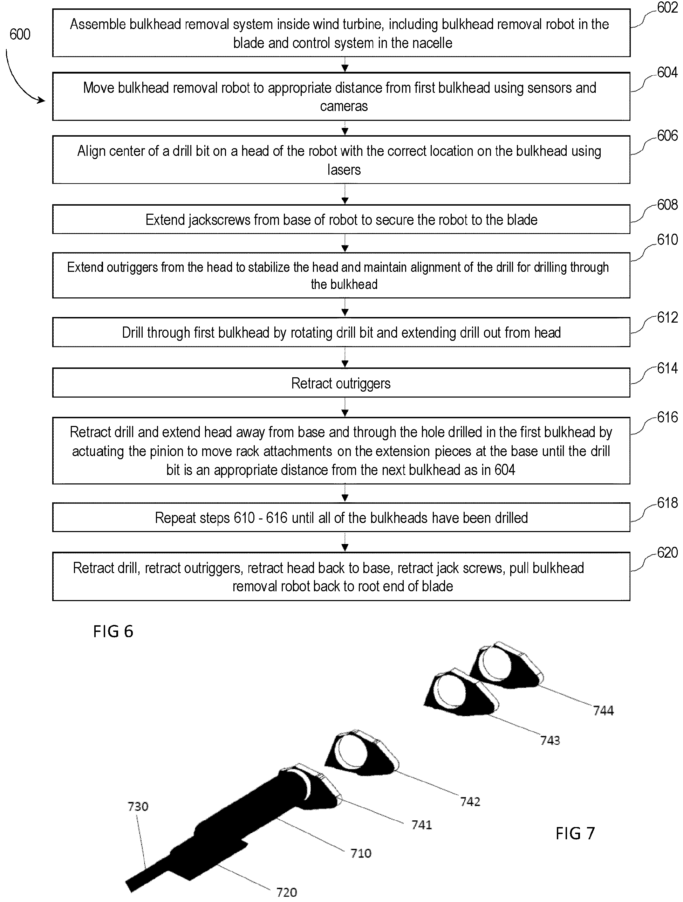

The second camera is positioned on the leading edge side of the head 510 and pointing towards the tip. This camera is used to see what is in front of the head 510. The third camera is positioned on top of the first connection box and pointed towards the tip of the blade to monitor the movement of the head 510 and base 520 both during initial positioning of the head 510/base 520 and during drilling. The fourth camera is on top of the head 510 but pointing towards the root of the blade and is used when retracting the entire robot back towards the root. Figure 6 is a flow diagram of a method 600 of removing bulkhead using the bulkhead removal system, according to an embodiment.

At 602, of method 600, the bulkhead removal system is assembled in the wind turbine. As discussed above in Figure 4, this includes assembling the drilling subsystem, extension subsystem, connection subsystem, and control subsystem within the wind turbine. The drilling subsystem, extension subsystem, and connection subsystem are assembled within the blade (although the power source may or may not be within the blade and some of the power cables of the connection subsystem extend into the nacelle), while the control subsystem is assembled within the blade and the nacelle. The drilling subsystem, extension subsystem, and connection subsystem comprise a bulkhead removal robot.

The drilling subsystem comprises a head which includes a drill bit on a drill body where the drill body moves in an out of the tip side of a body of the head, proximity sensors, lasers, and camera which enable positioning and alignment of the drill at the bulkhead, outriggers which contact the blade to enable alignment and stability of the drill at the bulkhead, and an extension piece connection which connects the drilling subsystem to the extension subsystem to allow extension of the head towards the tip end of the blade.

The extension subsystem comprises a base which includes a cavity in which an extension piece with a rack attachment is positioned, a pinion and pinion actuator which are coupled to the rack attachment such that the actuator can actuate the pinion to move the rack attachment extension piece towards the tip or away from the tip of the blade, jackscrews to secure the base in place within the blade by contacting the interior surface of the blade wherein the jackscrews extend and retract by jackscrew actuators, and extension pieces which connect the rack attachment extension piece to the extension piece connection on the head.

The connection subsystem includes at least one connection box to which power cables from the electrical components of the drilling subsystem and extension subsystem (e.g., the drill, lasers, cameras, sensors, actuators, etc.) are connected, wherein the connection box then connects to a power source to provide power through the power cables to the drilling subsystem and extension subsystem components.

The control subsystem includes the at least one connection box which also receives communication/data cables from the various components of the drilling system and extension subsystem which create data and which need to receive instructions to operate. The communication/data cables may include a plurality of cables from the cameras and sensors. The control subsystem also includes a computing device, preferably a laptop, which has at least one processor and at least one memory which stores processor executable instructions to provide a user interface to a user which enables the user to view the communication/data input from the bulkhead removal robot and to control the operation of the bulkhead removal robot. A network connection cable connects the connection box to the laptop. The control subsystem also includes a safety control, separate from the computing device controls, which enables the user to pause or emergency stop operation of the bulkhead removal robot.

Assembling the bulkhead removal system inside the wind turbine includes connecting all of the components of each subsystem together to create the bulkhead removal robot and connecting the various cables of the bulkhead removal robot to the control system. Assembly of the bulkhead removal system is discussed at Figure 13 below.

At 604, the bulkhead removal robot is moved to an appropriate distance from the first bulkhead. In one embodiment, the robot is moved to an appropriate distance by manually (by humans) pushing the base towards the tip of the blade using a series of rods connected to the base. The head is connected to the tip side of the base by the extension pieces and is also pushed towards the tip of the blade when the base moves forward, The connection box(es) are pulled behind the base because they are connected to the base and had by the power and communication/data cables which are preferably housed in bundles and attached to the extension pieces.

The tip of the drill bit needs to be within 10mm of the surface of the bulkhead which can be determined by the proximity sensor, however, the proximity sensor has a maximum detection limit of 50mm so a human in the nacelle watching the user interface of the control system can monitor the view from a camera aimed at the drill to report to the humans who are in the blade manually pushing the robot how close they are to the bulkhead. Other distances and different types of proximity sensors may be used.

In other embodiments, the robot may be pushed to an appropriate distance by others means, for example, another robot which can push the base. All of the steps after pushing the robot to the appropriate location are completed from the user interface of the control system.

At 606, the center of the drill bit is aligned with the desired location on the bulkhead. The desired location may be the center of the bulkhead or may be a location which is the center with respect to high and low pressure surfaces of the leading edge of the blade. Lasers on the drill shine onto the bulkhead surface to assist in aligning the drill with the desired location on the bulkhead. In some embodiments, the lasers are first vertically aligned with the outriggers on the top and/or bottom of the head and then horizontally aligned. Alignment of the drill using the lasers is controlled from the user interface of the control system. At 608, the jackscrews are extended from the base to secure the base against the interior surface of the blade. The base is secured before drilling begins and only released once drilling is completed in order to maintain alignment of the drill throughout drilling of all of the bulkheads.

At 610, the outriggers are extended from the head to stabilize the head and the drill within the blade and to maintain alignment of the drill during drilling. Extension of the jackscrews and outriggers is controlled from the user interface of the control system and the distance of extension can be specifically controlled to help with aligning the drill. At 612, the drill bit is powered to rotate and the drill body is extended out from the body of the head to drill through the bulkhead. The speed of rotation and the speed of progress of forward movement of the drill towards the tip can be varied at the user interface of the control system. At 614, once the drill has drilled through bulkhead the outriggers are retracted to release the head from contact with the blade.

At 616, the drill is retracted back into the head and the head is extended away from the base and towards the tip of the blade by actuating the pinion of the base to move the rack attachment of the extension piece in the base. The head passes through the first bulkhead and moves towards the second bulkhead until the drill bit is within 10mm of the bulkhead using the camera and the proximity sensor as in 604 above. At 618, steps 610-616 are repeated until all of the bulkheads have been drilled through.

At 620, the drill is retracted into the head, the outriggers are retracted, the head is retracted back towards the base to the initial position on the root side of the first bulkhead, the jackscrews are retracted to release the base from being secured to the interior of blade, and the bulkhead removal robot can be brought back to the root end of the blade for disassembly. The robot can be pulled back using the rods. In some embodiments, a rope is attached to the base for pulling back the robot if the rods become disconnected.

After the robot is disassembled and removed from the blade, the blade can be tilted up so that the drilled pieces of the bulkhead fall to the root end of the blade and can be cleaned up. In some embodiments, the bulkhead removal system has an integrated vacuum system for cleaning the pieces of bulkhead during operation of the bulkhead removal system.

Figure 7 is a perspective view of part of the bulkhead removal system and four bulkheads showing the head positioned before the bulkheads, according to an embodiment. Head 710 is connected to base 720 by extension pieces 730. The head 710 is positioned just in front of a first bulkhead. The bulkheads 741, 742, 743, and 744 are shown with holes already drilled. In Figure 7 the head and base are shown in close approximation to each other. In this embodiment the extension pieces which are connected to the head may be directly movable by the base. That is all of the extension pieces may be able to come in physical contact with the mechanism for movement at the base.

In some embodiments, the mechanism for extension of the head away from the base may not be a rack and pinion system but may be any other mechanism suitable for movement of the head away from the base. In other embodiments, the head may be more removed from the base and cannot get closer to the base than the length of the extension pieces wherein some of the extension pieces between the base and the head do not have a means for direct movement and only move indirectly because they are connected to extension pieces which do include means for movement. For example, with a rack and pinion, extension pieces which directly contact the pinion will have a rack attachment while extension pieces, closer to the head and attached to the head, do not have rack attachments.

Figure 8 is a perspective view of part of the bulkhead removal system and four bulkheads showing the head and extension pieces positioned between the second and third bulkheads, according to an embodiment. Head 810 is connected to base 820 by extension pieces 830. There are four bulkheads 841, 842, 843, and 844 (shown with holes already drilled). The head 810 is positioned between the second bulkhead 842, and third bulkhead 843.

Figure 9A is a side view of the head of the bulkhead removal system, according to an embodiment. Figure 9B is a perspective view of the head of the bulkhead removal system, according to an embodiment. Figures 9A and 9B show views of a head 910 of the drilling subsystem of the bulkhead removal system. Head 910 has an extension piece connection 915 at the root end. The extension connection piece 915 can be connected to a tip-most extension piece using six bolts. In other embodiments there may be more or less bolts or a different connection type. Head 910 includes three outriggers 920 which extend out from the body 911 of head 910 to contact the blade at a top surface, bottom surface, and shear web surface. At the tip side of head 910 there is a drill 930 comprising a drill bit 931 and a drill body 935. The drill bit 931 operates to drill through the bulkhead and the drill body extends and retracts from the body 911 of the head 910 to push the drill through the bulkhead.

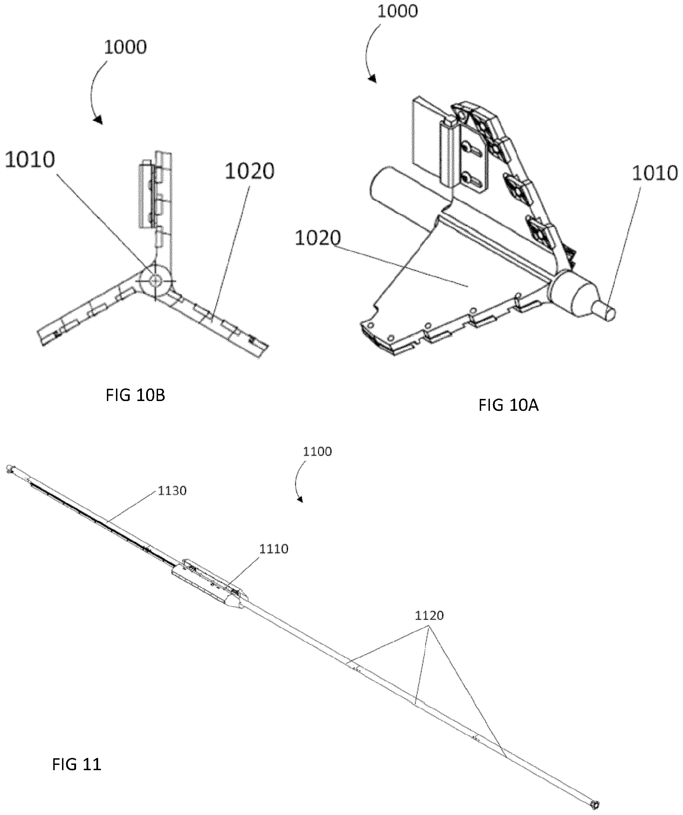

Figure 10A is a perspective view of the drill bit of the head of the bulkhead removal system, according to an embodiment. Figure 10B is a front view of the drill of the robot head of the bulk, according to an embodiment. Figures 10A and 10B both show an embodiment of the drill bit. The drill bit includes three cutting tools 1010 and a center point 1020. In operation, the center point 1010 is aligned with the center of the area of the bulkhead which is to be drilled. When the drill is turned on the drill bit rotates and is moved towards the bulkhead to drill through the bulkhead material. The hole which is made by the drill bit 1000 is large enough for the head of the bulkhead removal robot to move through the bulkhead in order to reach the next bulkhead.

Figure 11 is a perspective view of part of an extension subsystem 1100 comprising a base 1110, extension pieces 1120, and rack attachment extension pieces 1130 of the bulkhead removal system, according to an embodiment. Figure 11 shows an extension subsystem in which some of the extension pieces which connect the base to the head do not comprise rack attachments. Three such extension pieces 1120 are shown in Figure 11. The extension piece 1120 closest to the tip end (right side of figure) would be connectable to the head of the robot at an extension piece connection of the head.

Rack attachment extension pieces 1130 are located at the root side (left side of figure, closer to the hub of the wind turbine) of the extension subsystem and can be positioned within a cavity of the base 1110. Extension pieces 1120 are connected to extension pieces 1130. The base 1110 comprises a pinion which is coupled to the rack attachments of the extension pieces 1130 and an actuator which rotates the pinion to cause extension or retraction of the extension pieces 1120 and 1130.

Figures 12A-12C show various aspects of a base of a bulkhead removal system, according to an embodiment. Figure 12A is side view of the robot base of the bulkhead removal system, according to an embodiment. Not all elements are discussed. At the root side of the base 1200 a rear side 1211 of an extension piece is shown. At the tip side of the base 1200 a front side 1212 of the extension piece is shown. An extension piece connection point 1213 is at the front end of the extension piece. The extension piece is within a cavity of the base 1200. A rack attachment 1220 is on the extension piece. A pinion (not shown) is controlled by a rack and pinion actuator 1240 to move the extension piece towards the tip of the blade (extension) or towards the root of the blade (retraction). Jackscrews are not shown in Figure 12, but four jackscrew actuators 1240 (only one called out to reduce clutter) are shown. Figure 12B shows a perspective view of an embodiment of a shell tip of a base of a bulkhead removal system. Figure 12C shows a front view of a jackscrew 1245 and a jackscrew actuator 1240.

Figure 13 is a flow diagram of a general method of assembly of a bulkhead removal system, according to an embodiment. The components of the bulkhead removal system of Figure 13 are the same as the components in Figures 4, 5, and 6.

At 1302, the control system is set up in the nacelle. The control system consists of a computing device having at least one processor and a memory storing processor executable instructions which the processor executes to generate a user interface of a software program for a user to control the various elements of the bulkhead removal robot. The computing device would preferably be a laptop but could be any computing device with sufficient processing power and memory, at least one screen to display the user interface, and user input devices such as a keyboard, mouse, touchscreen or similar. The user interface needs to display a significant amount of information to the operator of the control system and therefore having at least one extra screen is beneficial. The control system also includes a safety control which the operator can use to pause or emergency stop the operation of the drill. The assembly of the control system could occur concurrently with some of the steps of the assembly of the bulkhead removal robot.

At 1304, the head, base, rack attachment extension piece, extension pieces, rods, and connection boxes are brought into the blade. At 1306, the extension pieces are connected together. The extension pieces may be connected by a plurality of bolts or by other means which enable a strong connection between extension pieces. The extension pieces are then connected to the extension piece connection on the root side of the head. The cables from the head (power cables, sensor cables, control cables, etc.) are secured within a bundle of cables. The bundle of cables is secured along the length of the extension pieces. At 1308, the extension pieces are secured to the base by attaching the extension pieces to the rack attachment extension piece. The extension piece with rack is attached to the base such that the rack is coupled to the pinion so that when the pinion is actuated the rack attachment extension piece (and attached extension pieces and head) are moved.

At 1310, the cables from the head and base are secured together. The base also has a plurality of cables (power cables, control cables, etc.) which are secured within a bundle. The head bundle which runs along the extension pieces is secured to the base bundle to avoid tangling. At 1312, the head cables and base cables are connected to the connection box. The connection box includes connections for each type of cable present from the head and the base. At 1314, the connection box is connected to the control system. This could occur at any point after the control system is assembled. At 1316, the operators ensure that all of the outriggers and jackscrews are fully retracted. The extension and retraction of the outriggers and jackscrews is controlled through the user interface of the control system, but manual inspection of the jackscrews and outriggers may be beneficial, as outriggers and jackscrews could damage the blade if the bulkhead removal robot is moved while they are extended. At 1318, the first rod (tip side rod) is connected to the base at a rod connection. The rods may be connected, both to the base and to other rods, using male-female connectors. As discussed above, the rods are used to push the bulkhead removal system to the correct starting location for drilling.

Although herein the removal of bulkhead materials has been discussed with reference to installation of ice protection systems, the removal of bulkhead material may be required or beneficial for installation, either temporary or permanent, of other systems within a wind turbine blade, for example, inspection systems. Although herein the extension of the robot is described for a rack and pinion system, other systems of movement of the robot head within the blade could be employed. Although herein the control of the robot is described as being accomplished through wired connections, some of the control could also be accomplished through wireless connections.

While the above description provides examples of one or more apparatus, methods, or systems, it will be appreciated that other apparatus, methods, or systems may be within the scope of the claims as interpreted by one of skill in the art.

## Claims

1. A method of removing a bulkhead (310) in a wind turbine blade (101), the method comprising:
positioning a bulkhead removal device (405) at a desired distance from a first bulkhead (741);
aligning a drill (412, 930) on the first bulkhead;
securing an extension subsystem (420, 1100) to the blade;
securing the drill to the blade; and
drilling a first bulkhead.

2. The method of claim 1 further comprising:
releasing the drill from the blade;
extending the drill through the first bulkhead to a second bulkhead (742), by the secured extension subsystem;
securing the drill to the blade; and
drilling the second bulkhead.

3. The method of any one of claims 1 to 2 wherein positioning the bulkhead removal device, aligning the drill, securing the extension subsystem, securing the drill, and drilling the first bulkhead are all controlled by a control subsystem (450, 550).

4. The method of claim 3 wherein positioning the bulkhead removal device further includes using a proximity sensor (413) and at least one camera (416) which provide information to an operator at a user interface (452) of the control subsystem.

5. The method of any one of claims 1 to 4 wherein securing the extension system to the blade further includes extending a plurality of jackscrews (426, 1245) out from the extension subsystem to contact an interior of the blade.

6. The method of any one of claims 1 to 5 wherein securing the drill to the blade further includes extending a plurality of outriggers (414, 920) out from the drill to contact the interior of the blade.

7. The method of claim 6 wherein releasing the drill from the blade includes retracting the plurality of outriggers back towards the drill.

8. The method of any one of claims 3 or 4 wherein the control subsystem includes at least one computing device (451) having at least one processor and a memory storing processor-executable instructions, wherein the processor executes the instructions to run an application and generate a user interface, and wherein an operator controls the operation of the bulkhead removal system through the user interface.

9. A bulkhead removal system comprising:
a bulkhead removal device (405) comprising:
a drilling subsystem (410) comprising:
a head (910), having a body (911), with a drill (930) at a tip end of the head, the drill including a drill bit (931) and a drill body (935), wherein the drill body is at least partially housed within the body and extends out of the body to drill through a bulkhead (741), and wherein the drill is operably connected to a control subsystem (450, 550);
a plurality of outriggers (414, 920) on the head which extend out from the body of the head to releasably secure the head to an interior of a wind turbine blade (101), wherein the outriggers are operably connected to the control subsystem; and
an extension piece connection (915) on a root end of the head;
an extension subsystem (420, 1100), physically connectable to the drilling subsystem and releasably securable to the wind turbine blade, for moving the drilling subsystem toward a tip end of the wind turbine blade and moving the drilling subsystem away from the tip end of the wind turbine blade, the extension subsystem comprising:
a base (421, 1110, 1200) with a cavity, wherein the base is connected to a rack attachment (1220) on a rack attachment extension piece (422, 1130), and the rack attachment extension piece is positioned within the cavity;
a plurality of extension pieces (425, 1120) which are connected end to end, wherein a root-most extension piece is connected to the rack attachment extension piece and a tip-most extension piece is connected to the extension piece connection on the head;
a plurality of jackscrews (426, 1245) on the base which are extendable out from the base to releasably secure the base to the wind turbine blade;
a pinion (423) and pinion actuator (424, 1240) within the base which are operably coupled to the rack attachment, wherein the pinion actuator is operably connected to the control subsystem, and wherein rotation of the pinion moves the head of the drilling subsystem by moving the rack attachment extension piece; and
the control subsystem for controlling movement of the drilling subsystem and the extension subsystem, and for controlling operation of the drill.

10. The bulkhead removal system of claim 9 wherein the rack attachment extension piece comprises at least two sections and the at least two sections are connected end to end.

11. The bulkhead removal system of any one of claims 9 to 10 wherein the control subsystem includes at least one computing device (451) having at least one processor and a memory storing processor-executable instructions, wherein the processor executes the instructions to run an application and generate a user interface (452) which enables an operator to control operation of the drilling subsystem and the extension subsystem.

12. The bulkhead removal system of any one of claims 9 to 11 further comprising a connection subsystem (440) to receive power cables (448) from the drilling subsystem and the extension subsystem and connect the drilling subsystem and the extension subsystem to a power source, and to receive control cables from the drilling subsystem and the extension subsystem and connect the drilling subsystem and extension subsystem to the control subsystem.

13. The bulkhead removal system of claim 11, wherein the drilling subsystem further includes a proximity sensor (413) to determine a position of the drill relative to a bulkhead and wherein the proximity sensor is communicatively coupled to the control subsystem to provide proximity information to the operator.

14. The bulkhead removal system of claim 11, wherein the drilling subsystem further includes at least one camera (416) to provide a view of the drill which can be viewed by the operator on the user interface.

15. The bulkhead removal system of claim 14 wherein the drilling subsystem further includes at least one laser (415) for aligning the drill with each of the plurality of bulkheads, wherein the at least one camera provides a view of the laser which can be viewed by operator on the user interface.

## Patentansprüche

1. Verfahren zum Ausbauen eines Schotts (310) in einem Windturbinenblatt (101), das Verfahren umfassend:
Positionieren einer Schott-Ausbauvorrichtung (405) in einem gewünschten Abstand von einem ersten Schott (741);
Ausrichten eines Bohrers (412, 930) an dem ersten Schott;
Befestigen eines Ausfahr-Teilsystems (420, 1100) an dem Rotorblatt;
Befestigen des Bohrers an dem Rotorblatt; und
Durchbohren eines ersten Schotts.

2. Verfahren nach Anspruch 1, ferner umfassend:
Lösen des Bohrers von dem Rotorblatt;
Ausfahren des Bohrers durch das erste Schott zu einem zweiten Schott (742), durch das befestigte Ausfahr-Teilsystem;
Befestigen des Bohrers an dem Rotorblatt; und
Durchbohren des zweiten Schotts.

3. Verfahren nach einem der Ansprüche 1 bis 2, wobei das Positionieren der Schott-Ausbauvorrichtung, das Ausrichten des Bohrers, das Befestigen des Ausfahr-Teilsystems, das Befestigen des Bohrers und das Durchbohren des ersten Schotts von einem Steuerungs-Teilsystem (450, 550) gesteuert werden.

4. Verfahren nach Anspruch 3, wobei das Positionieren der Schott-Ausbauvorrichtung ferner das Verwenden eines Näherungssensors (413) und mindestens einer Kamera (416) einschließt, die Informationen an einen Bediener an einer ersten Schnittstelle (452) des Steuerungs-Teilsystems bereitstellt.

5. Verfahren nach einem der Ansprüche 1 bis 4, wobei das Befestigen des Ausfahrsystems an dem Rotorblatt ferner das Ausfahren einer Vielzahl von Abdrückschrauben (426, 1245) aus dem Ausfahr-Teilsystem einschließt, um Kontakt zu einer Innenseite des Rotorblatts herzustellen.

6. Verfahren nach einem der Ansprüche 1 bis 5, wobei das Befestigen des Bohrers an dem Rotorblatt ferner das Ausfahren einer Vielzahl von Stützen (414, 920) aus dem Bohrer einschließt, um Kontakt zu einer Innenseite des Rotorblattes herzustellen.

7. Verfahren nach Anspruch 6, wobei das Lösen des Bohrers von dem Rotorblatt, das Einziehen der Vielzahl von Stützen zurück in den Bohrer einschließt.

8. Verfahren nach einem der Ansprüche 3 oder 4, wobei das Steuerungs-Teilsystem mindestens ein Computergerät (451) mit mindestens einem Prozessor und einem Speicher einschließt, der von dem Prozessor ausführbare Anweisungen speichert, wobei der Prozessor die Anweisungen ausführt, um eine Anwendung zu betreiben und eine Benutzerschnittstelle zu erzeugen, und wobei ein Bediener den Betrieb des Schott-Ausbausystems über die Benutzerschnittstelle steuert.

9. Schott-Ausbausystem umfassend:
Schott-Ausbauvorrichtung (405), umfassend:
Ein Bohr-Teilsystem (410), umfassend:
Einen Kopf (910), mit einem Körper (911), mit einem Bohrer (930) an einem Spitzenende des Kopfes, wobei der Bohrer einen Bohreinsatz (931) und einen Bohrkörper (935) einschließt, wobei der Bohrkörper mindestens teilweise in dem Körper untergebracht ist und sich aus dem Körper heraus erstreckt, um durch ein Schott (741) zu bohren, und wobei der Bohrer funktionsbereit mit einem Steuerungs-Teilsystem (450, 550) verbunden ist;
eine Vielzahl von Stützen (414, 920) an dem Kopf, die aus dem Körper des Kopfes herausfahren, um den Kopf lösbar an einer Innenseite eines Rotorblattes einer Windturbine (101) zu befestigen, wobei die Stützen funktionsfähig mit dem Steuerungs-Teilsystem verbunden sind; und
eine Ausfahrteil-Verbindung (915) an einem Fußende des Kopfes;
ein Ausfahr-Teilsystem (420, 1100), physisch verbindbar mit dem Bohr-Teilsystem und lösbar an dem Windturbinenblatt befestigbar, um das Bohr-Teilsystem zu einem Spitzenende des Windturbinenblatts zu bewegen und das Bohr-Teilsystem weg von dem Spitzenende des Windturbinenblatts zu bewegen, das Ausfahr-Teilsystem umfassend:
Eine Basis (421, 1110, 1200) mit einer Aussparung, wobei die Basis mit einem Baugruppenträger (1220) an einem Baugruppenträger-Ausfahrteil (422, 1130) verbunden ist, und das Baugruppenträger-Ausfahrteil innerhalb der Aussparung positioniert ist;
eine Vielzahl von Ausfahrteilen (425, 1120), die an den Enden miteinander verbunden sind, wobei ein am nächsten am Fuß liegendes Ausfahrteil mit dem Baugruppenträger-Ausfahrteil verbunden ist und ein am nächsten an der Spitze liegendes Ausfahrteil mit der Ausfahrteil-Verbindung am Kopf verbunden ist;
eine Vielzahl von Abdrückschrauben (426, 1245) an der Basis, die aus der Basis ausfahrbar sind, um die Basis lösbar an dem Windturbinenblatt zu befestigen;
eine Zahnstange (423) und ein Zahnstangen-Stellantrieb (424, 1240) innerhalb der Basis, die funktionsfähig mit dem Baugruppenträger gekoppelt sind, wobei der Zahnstangen-Stellantrieb funktionsfähig mit dem Steuerungs-Teilsystem verbunden ist, und wobei eine Rotation der Zahnstange den Kopf des Bohr-Teilsystems durch Bewegen des Baugruppenträger-Ausfahrteils bewegt; und
das Steuerungs-Teilsystem zum Steuern der Bewegung des Bohr-Teilsystems und des Ausfahr-Teilsystems und zum Steuern des Bohrerbetriebs.

10. Schott-Ausbauvorrichtung nach Anspruch 9, wobei das Baugruppenträger-Ausfahrteil mindestens zwei Abschnitte umfasst und die mindestens zwei Abschnitte an den Enden miteinander verbunden sind.

11. Schott-Ausbauvorrichtung nach einem der Ansprüche 9 bis 10, wobei das Steuerungs-Teilsystem mindestens ein Computergerät (451) mit mindestens einem Prozessor und einem Speicher einschließt, der von dem Prozessor ausführbare Anweisungen speichert, wobei der Prozessor die Anweisungen ausführt, um eine Anwendung zu betreiben und eine Benutzerschnittstelle (452) zu erzeugen, die einen Bediener in die Lage versetzt, den Betrieb des Bohr-Teilsystems und des Ausfahr-Teilsystems zu steuern.

12. Schott-Ausbausystem nach einem der Ansprüche 9 bis 11, ferner umfassend ein Verbindungs-Teilsystem (440), um Stromkabel (448) von dem Bohr-Teilsystem und dem Ausfahr-Teilsystem aufzunehmen und das Bohr-Teilsystem und das Ausfahr-Teilsystem mit einer Stromquelle zu verbinden, und Steuerkabel von dem Bohr-Teilsystem und dem Ausfahr-Teilsystem aufzunehmen und das Bohr-Teilsystem und Ausfahr-Teilsystem mit dem Steuerungs-Teilsystem zu verbinden.

13. Schott-Ausbausystem nach Anspruch 11, wobei das Bohr-Teilsystem ferner einen Näherungssensor (413) einschließt, um eine Position des Bohrers im Verhältnis zu einem Schott zu bestimmen und wobei der Näherungssensor kommunikativ mit dem Steuer-Teilsystem gekoppelt ist, um dem Bediener Näherungsinformationen bereitzustellen.

14. Schott-Ausbausystem nach Anspruch 11, wobei das Bohr-Teilsystem ferner mindestens eine Kamera (416) einschließt, um eine Ansicht des Bohrers bereitzustellen, die von dem Bediener an der Benutzerschnittstelle betrachtet werden kann.

15. Schott-Ausbausystem nach Anspruch 14, wobei das Bohr-Teilsystem ferner mindestens einen Laser (415) einschließt, um den Bohrer an jedem der Vielzahl von Schotts auszurichten, wobei die mindestens eine Kamera eine Ansicht des Lasers bereitstellt, die von einem Bediener an der Benutzerschnittstelle betrachtet werden kann.

## Revendications

1. Procédé d'enlèvement d'une cloison (310) dans une pale d'éolienne (101), le procédé comprenant :
le positionnement d'un dispositif d'enlèvement de cloison (405) à une distance souhaitée d'une première cloison (741) ;
l'alignement d'une perceuse (412, 930) sur la première cloison ;
l'immobilisation d'un sous-système d'extension (420, 1100) à la pale ;
l'immobilisation de la perceuse à la pale ; et
le perçage d'une première cloison.

2. Procédé selon la revendication 1 comprenant en outre :
le détachement de la perceuse de la pale ;
l'extension de la perceuse à travers la première cloison jusqu'à une seconde cloison (742), par le sous-système d'extension immobilisé ;
l'immobilisation de la perceuse à la pale ; et
le perçage de la seconde cloison.

3. Procédé selon l'une quelconque des revendications 1 à 2, dans lequel le positionnement du dispositif d'enlèvement de cloison, l'alignement de la perceuse, l'immobilisation du sous-système d'extension, l'immobilisation de la perceuse et le perçage de la première cloison sont tous commandés par un sous-système de commande (450, 550).

4. Procédé selon la revendication 3, dans lequel le positionnement du dispositif d'enlèvement de cloison comporte en outre l'utilisation d'un capteur de proximité (413) et d'au moins une caméra (416) qui fournissent des informations à un opérateur au niveau d'une interface utilisateur (452) du sous-système de commande.

5. Procédé selon l'une quelconque des revendications 1 à 4, dans lequel l'immobilisation du système d'extension à la pale comporte en outre l'extension d'une pluralité de vérins à vis (426, 1245) hors du sous-système d'extension pour venir en contact avec un intérieur de la pale.

6. Procédé selon l'une quelconque des revendications 1 à 5, dans lequel l'immobilisation de la perceuse à la pale comporte en outre l'extension d'une pluralité de stabilisateurs (414, 920) hors de la perceuse pour venir en contact avec l'intérieur de la pale.

7. Procédé selon la revendication 6, dans lequel la libération de la perceuse de la pale comporte la rétraction de la pluralité de stabilisateurs vers la perceuse.

8. Procédé selon l'une quelconque des revendications 3 ou 4, dans lequel le sous-système de commande comporte au moins un dispositif informatique (451) présentant au moins un processeur et une mémoire mémorisant des instructions exécutables par un processeur, dans lequel le processeur exécute les instructions pour exécuter une application et générer une interface utilisateur, et dans lequel un opérateur commande le fonctionnement du système d'enlèvement de cloison au moyen de l'interface utilisateur.

9. Système d'enlèvement de cloison comprenant :
un dispositif d'enlèvement de cloison (405) comprenant :
un sous-système de perçage (410) comprenant :
une tête (910), présentant un corps (911), comportant une perceuse (930) à une extrémité de pointe de la tête, la perceuse comportant un foret (931) et un corps de perceuse (935), dans lequel le corps de perceuse est au moins partiellement logé dans le corps et s'étend hors du corps pour percer à travers une cloison (741), et dans lequel la perceuse est reliée de manière fonctionnelle à un sous-système de commande (450, 550) ;
une pluralité de stabilisateurs (414, 920) sur la tête qui s'étendent hors du corps de la tête pour fixer de manière libérable la tête à l'intérieur d'une pale d'éolienne (101), dans lequel les stabilisateurs étant reliés de manière fonctionnelle au sous-système de commande ; et
un raccordement de la pièce d'extension (915) sur une extrémité de racine de la tête ;
un sous-système d'extension (420, 1100), physiquement raccordable au sous-système de perçage et pouvant être fixé de manière libérable à la pale d'éolienne, destiné à déplacer le sous-système de perçage vers une extrémité de pointe de la pale d'éolienne et éloigner le sous-système de perçage de l'extrémité de pointe de la pale d'éolienne, le sous-système d'extension comprenant :
une base (421, 1110, 1200) dotée d'une cavité, dans lequel la base est reliée à une fixation de la crémaillère (1220) sur une pièce d'extension de fixation de la crémaillère (422, 1130) et la pièce d'extension de fixation de la crémaillère est positionnée à l'intérieur de la cavité ;
une pluralité de pièces d'extension (425, 1120) qui sont reliées bout à bout, dans lequel une pièce d'extension la plus à la racine étant reliée à la pièce d'extension de fixation de la crémaillère et une pièce d'extension la plus à la pointe étant reliée au raccordement de la pièce d'extension sur la tête ;
une pluralité de vérins à vis (426, 1245) sur la base qui peuvent être déployées à partir de la base pour fixer de manière libérable la base à la pale d'éolienne ;
un pignon (423) et un actionneur de pignon (424, 1240) à l'intérieur de la base sont accouplés de manière fonctionnelle à la fixation de la crémaillère, dans lequel l'actionneur de pignon étant relié de manière fonctionnelle au sous-système de commande, et dans lequel la rotation du pignon déplaçant la tête du sous-système de perçage en déplaçant la pièce d'extension de la fixation de la crémaillère ; et
le sous-système de commande permet de commander le mouvement du sous-système de perçage et du sous-système d'extension et de commander le fonctionnement de la perceuse.

10. Système d'enlèvement de cloison selon la revendication 9, dans lequel la pièce d'extension de la fixation de la crémaillère comprend au moins deux sections et lesdites au moins deux sections sont reliées bout à bout.

11. Système d'enlèvement de cloison selon l'une quelconque des revendications 9 à 10, dans lequel le sous-système de commande comprend au moins un dispositif informatique (451) présentant au moins un processeur et une mémoire mémorisant des instructions exécutables par un processeur, dans lequel le processeur exécute les instructions pour lancer une application et générer une interface utilisateur (452) qui permet à un opérateur de commander le fonctionnement du sous-système de perçage et du sous-système d'extension.

12. Système d'enlèvement de cloison selon l'une quelconque des revendications 9 à 11, comprenant en outre un sous-système de connexion (440) pour recevoir des câbles d'alimentation (448) du sous-système de perçage et du sous-système d'extension et connecter le sous-système de perçage et le sous-système d'extension à une source d'alimentation, et pour recevoir des câbles de commande du sous-système de perçage et du sous-système d'extension et connecter sous-système de perçage et le sous-système d'extension au sous-système de commande.

13. Système d'enlèvement de cloison selon la revendication 11, dans lequel le sous-système de perçage comporte en outre un capteur de proximité (413) pour déterminer une position de la perceuse par rapport à une cloison et dans lequel le capteur de proximité est couplé de manière à communiquer avec le sous-système de commande pour fournir des informations de proximité à l'opérateur.

14. Système d'enlèvement de cloison selon la revendication 11, dans lequel le sous-système de perçage comporte en outre au moins une caméra (416) pour fournir une vue de la perceuse qui peut être vue par l'opérateur sur l'interface utilisateur.

15. Système d'enlèvement de cloison selon la revendication 14, dans lequel le sous-système de perçage comporte en outre au moins un laser (415) destiné à aligner la perceuse avec chaque cloison de la pluralité de cloisons, dans lequel ladite au moins une caméra fournit une vue du laser qui peut être vu par un opérateur sur l'interface utilisateur.
